# EUROPÄISCHE PATENTSCHRIFT

(11) **EP 3 672 401 B1**
(45) Veröffentlichungstag und Bekanntmachung des Hinweises auf die Patenterteilung: **06.10.2021**
(21) Anmeldenummer: 18758600.3
(22) Anmeldetag: 21.08.2018
(51) Int. Cl.: A01K 31/00, A01K 31/17

(54) **STECKBARE GEFLÜGELHALTUNGSANLAGE**
POULTRY RETAINING SYSTEM WHICH CAN BE PLUGGED TOGETHER
INSTALLATION ENFICHABLE POUR VOLAILLE

(30) Priorität: 23.08.2017 DE 202017105052 U
(43) Veröffentlichungstag der Anmeldung: 01.07.2020
(73) Patentinhaber: Kühlmann, Franz Josef, 48612 Horstmar (DE)
(72) Erfinder: Kühlmann, Franz Josef, 48612 Horstmar (DE)
(74) Vertreter: Habbel, Ludwig
(86) Internationale Anmeldenummer: PCT/EP2018/072499
(87) Internationale Veröffentlichungsnummer: WO 2019/038257

(56) Entgegenhaltungen:
- EP-A1- 2 829 745
- EP-A2- 1 616 484
- DE-U- 6 944 571
- US-A- 4 195 592

## Beschreibung

Die Erfindung betrifft eine Geflügelhaltungsanlage nach dem Oberbegriff des Anspruchs 1.

Aus der DE 69 44 571 U1 ist eine gattungsgemäße Geflügelhaltungsanlage bekannt. Im Vergleich dazu, die Geflügelhaltungsanlage mithilfe von Schrauben zu errichten, ermöglicht eine schraubenlose Konstruktion der Geflügelhaltungsanlage eine erhebliche Zeiteinsparung beim Aufstellen der Geflügelhaltungsanlage, so dass eine dementsprechend ausgestaltete Geflügelhaltungsanlage mit vorteilhaft geringen Lohnkosten errichtet werden kann.

Auch aus der EP 1 616 484 A2 und der US 4 195 592 A sind Geflügelhaltungsanlagen bekannt, deren Längs- und Querträger Steckmöglichkeiten bzw. Einhängemöglichkeiten zur schraubenlosen Verbindung mit anderen Bauteilen aufweisen.

Der Erfindung liegt die Aufgabe zugrunde, eine gattungsgemäße Geflügelhaltungsanlage dahingehend zu verbessern, dass diese möglichst wirtschaftlich ausgestaltet ist.

Diese Aufgabe wird durch eine Geflügelhaltungsanlage mit den Merkmalen des Anspruchs 1 gelöst. Vorteilhafte Ausgestaltungen sind in den Unteransprüchen beschrieben.

Die Erfindung schlägt mit anderen Worten vor, nicht nur eine besonders unkomplizierte und schnelle Errichtung der Geflügelhaltungsanlage zu ermöglichen, sondern auch die Konstruktion der Geflügelhaltungsanlage selbst möglichst preisgünstig auszugestalten. Vorschlagsgemäß ist hierzu vorgesehen, sowohl die Längsträger als auch die Querträger als Winkelprofile auszugestalten, beispielsweise als offene Profile mit einem L- oder U-förmigen Querschnitt, oder als geschlossene Profile mit einem beispielsweise rechteckigen Querschnitt. Die Längs- und Querträger sind derart ausgerichtet, dass ein Abschnitt aufrecht und ein so genannter Außenabschnitt liegend verläuft. Beispielsweise können handelsübliche extrudierte Profilschienen verwendet werden, die beispielsweise aus Stahl oder Aluminium bestehen können.

Insbesondere bei kleineren Bestellmengen kann es jedoch wirtschaftlich vorteilhaft sein, wenn die Winkelprofile nicht aus extrudierten Profilelementen, sondern vielmehr aus gekanteten Blechen bestehen, so dass beispielsweise für einzelne Projekte Geflügelhaltungsanlagen geschaffen werden können, deren Längs- und / oder Querträger besondere, sonst nicht übliche Abmessungen aufweisen. Hinsichtlich der Materialstärke und der jeweiligen Breite können die aufrechten Abschnitte und die liegenden Außenabschnitte bei Verwendung gekanteter Bleche einerseits an die erforderliche statische Belastbarkeit angepasst ausreichend groß und andererseits in wirtschaftlicher Hinsicht möglichst klein bemessen werden. So kann von den Abmessungen handelsüblicher extrudierter Profilschienen abgewichen werden und gleichzeitig können bei Verwendung gekanteter Bleche die Entwicklungs- und Werkzeugkosten vermieden werden, die für ein eigens anzufertigendes Extrusions-Sonderprofil erforderlich wären.

Die Festlegung der Längs- und Querträger an den Stützen erfolgt dadurch, dass die liegenden Außenabschnitte der Winkelprofile Ausnehmungen aufweisen, die als Bohrungen bezeichnet sind. Mit diesen Bohrungen werden die Längs- und Querträger auf die Stützen aufgefädelt. Die Bohrungen sind so groß bemessen, dass sie einerseits dieses Auffädeln ermöglichen, und andererseits so klein bemessen, dass die Längs- und Querträger auf den Absätzen aufliegen, die von den Stützen radial nach außen ragen.

Wenn die Winkelprofile als U-Profile ausgestaltet sind, weisen beide Außenabschnitte des jeweiligen U-Profils miteinander fluchtende Ausnehmungen auf. Als U-Profile ausgestaltete Winkelprofile ermöglichen somit eine besonders stabile Festlegung eines Längs- oder Querträgers an einer Stütze, und dies insbesondere, wenn die beiden Bohrungen so bemessen sind, dass sie der Stütze mit möglichst geringem Spiel anliegen. Nachfolgend werden - rein beispielhaft und ohne den vorliegenden Vorschlag auf diese Ausgestaltung einzuschränken - als offene, U-förmige Profile ausgestaltete Winkelprofile erwähnt, mit dementsprechend jeweils zwei Außenabschnitten, zwischen denen der aufrechte Abschnitt als so genannter Mittelabschnitt verläuft.

Die Stützen selbst und auch die Absätze können unterschiedliche Querschnittsgeometrien aufweisen, beispielsweise viereckig wie rechteckig oder quadratisch, sechseckig, sternförmig, oder auch rund wie z.B. oval oder kreisrund. Der Absatz kann als umlaufender Bund der Querschnittsgeometrie der Stütze folgen, er kann jedoch auch eine davon abweichende Querschnittsgeometrie aufweisen. Abhängig von der Form, den die an den Stützen vorgesehenen Absätze aufweisen, können die Ausnehmungen als Stanzlöcher ausgestaltet sein und eine vom Kreisrund abweichende Form aufweisen. Der Einfachheit halber und lediglich beispielhaft wird nachfolgend im Rahmen des vorliegenden Vorschlags davon ausgegangen, dass die Stützen, die Absätze und auch die Ausnehmungen in den Längs- und Querträgern jeweils einen kreisrunden Querschnitt aufweisen. Dementsprechend werden die Ausnehmungen stets als Bohrungen bezeichnet.

Die Verbindung zweier übereinander angeordneter Stützen kann durch zusätzliche Elemente erfolgen: beispielsweise kann ein Rohrabschnitt einen nach innen ragenden Vorsprung aufweisen. Mit seinem Bereich, der unterhalb dieses Vorsprungs angeordnet ist, kann der Rohrabschnitt auf das obere Ende einer ersten Stütze aufgesteckt werden. Der nach innen ragende Vorsprung stellt sicher, dass der Rohrabschnitt nicht an der Stütze entlang nach unten rutscht. Eine zweite, obere Stütze kann nun von oben in diesen Rohrabschnitt eingesteckt werden. Die Oberkante des Rohrabschnitts selbst kann den Absatz bilden, der zur Montage von Längs- und Querträgern dient, oder der Rohrabschnitt kann noch einen zusätzlichen, nach außen ragenden Bereich aufweisen, der diesen Absatz bildet.

Vorteilhaft kann vorgesehen sein, dass die Stützen nicht aus einem Vollmaterial bestehen, sondern jeweils als Rohr ausgestaltet sind. Hierdurch kann wirtschaftlich vorteilhaft im Vergleich zu einer Stange mit gleich großen Abmessungen Material eingespart werden. Die Montage wird aufgrund des verringerten Gewichts und der dementsprechend leichteren Handhabung der Stützen vereinfacht. Technisch vorteilhaft weist eine rohrförmige Stütze im Vergleich zu einer gleich großen Stange aus Vollmaterial eine höhere Biegesteifigkeit auf, so dass die rohrförmige Stütze bei gleicher Belastbarkeit mit geringeren Abmessungen hergestellt werden kann und die oben genannten Vorteile noch stärker ausgeprägt werden.

Bei Verwendung rohrförmiger Stützen kann zur Verbindung von zwei übereinander angeordneten Stützen ein zusätzliches Einsteckelement verwendet werden. Im Unterschied zu dem oben erwähnten Rohrabschnitt weist ein solches Einsteckelement einen nach außen ragenden Vorsprung auf, beispielsweise einen umlaufenden Bund, der es daran hindert, in das untere Rohr vollständig hinein zu rutschen. Dieser umlaufende Bund kann sich zudem so weit radial nach außen erstrecken, dass er zwischen den beiden Stützen den Absatz bildet, der zur Montage von Längs- und Querträgern dient.

Vorschlagsgemäß können die Stützen ineinandergesteckt werden, ohne dass es zusätzlicher Verbindungselemente bedarf, so dass die Kosten für Herstellung, Montage und Lagerhaltung von Ersatzteilen gering gehalten werden können. Hierzu weisen die Stützen jeweils ein Einsteckende und ein Muffenende auf. Die Stützen weisen einen ersten Abschnitt auf, der sich über den größten Teil der Länge der Stütze erstreckt. In diesem ersten Abschnitt weisen die Stützen einen ersten, als Außendurchmesser bezeichneten äußeren Durchmesser auf. Weiterhin weisen sie im Bereich ihres Einsteckendes einen zweiten, als Einsteckdurchmesser bezeichneten äußeren Durchmesser auf, der geringer ist als der Außendurchmesser. Auf diese Weise wird zwischen dem Außendurchmesser und dem Einsteckdurchmesser ein Absatz geschaffen, der ringförmig um das Einsteckende verläuft. Das Muffenende ist hülsenförmig ausgestaltet, weist also einen Hohlraum bzw. eine Bohrung auf, welche das Einsteckende einer benachbarten Stütze aufnehmen kann.

Insbesondere da die Stützen vorschlagsgemäß als Rohre ausgestaltet sind, bedarf es zur Schaffung des Muffenendes keiner zusätzlich einzubringenden Bohrung. Wirtschaftlich vorteilhaft ist vorschlagsgemäß vorgesehen, dass eine solche Stütze aus einem einzigen Rohr geschaffen ist, indem dieses Rohr an einem Ende zu einem geringeren Durchmesser verformt wird und so einstückig den ersten Abschnitt mit dem Muffenende, sowie den Absatz und das Einsteckende bildet.

Mit Hilfe miteinander fluchtenden Bohrungen kann ein Längs- oder Querträger auf eine Stütze gehängt werden. Die Längs- und Querträger können unterschiedliche Abmessungen des jeweiligen U-Profils aufweisen, so dass dort, wo ein Längsträger an der Stütze auf einen Querträger trifft, der eine innerhalb des anderen Trägers angeordnet sein kann. Bei im Querschnitt gleich großen U-Profilen können die beiden Träger zueinander höhenversetzt angeordnet werden, indem sie entweder praktisch ineinander verzahnt angeordnet sind oder der eine Träger vollständig oberhalb des anderen Trägers verläuft.
Dabei sind die Bohrungen unterschiedlich groß bemessen. Beispielsweise ist die untere Bohrung so groß bemessen, dass sie den Absatz übergreift, so dass der Absatz in der unteren Bohrung aufgenommen werden kann. Folglich kann der Längs- oder Querträger mit seiner unteren Bohrung von oben auf die Stütze aufgefädelt und so weit abgesenkt werden, dass die untere Bohrung am Absatz vorbei weiter nach unten geführt wird. Die obere Bohrung wird ebenfalls auf die Stütze aufgefädelt. Sie ist jedoch kleiner bemessen als die untere Bohrung und als der Umfang des Absatzes, so dass der obere Außenabschnitt des Längs- oder Querträgers schließlich auf dem Absatz aufliegt.

Für die oben beschriebenen Stützen, die ohne zusätzliche Elemente miteinander verbunden werden können und dazu ein Muffenende und ein Einsteckende aufweisen, werden vorschlagsgemäß Längs- und Querträger verwendet, deren U-Profil derart ausgerichtet ist, dass der untere Außenabschnitt eine Bohrung aufweist, die größer ist als der Außendurchmesser der Stütze. Im oberen Außenabschnitt des U-Profils hingegen weist die dortige Bohrung einen geringeren Durchmesser auf als der Außendurchmesser der Stütze, wobei diese kleinere Bohrung jedoch so groß bemessen ist, dass sie das Einsteckende der Stütze aufnehmen kann. Das U-Profil kann also von oben auf die Stütze aufgeschoben werden, bis der obere Außenabschnitt des U-Profils auf dem umlaufenden Absatz aufliegt, an welchem die Stütze vom Außendurchmesser zum Einsteckdurchmesser übergeht. Der gegenüberliegende, untere Außenabschnitt desselben U-Profils umgreift dabei dieselbe Stütze im Bereich ihres größeren Durchmessers, nämlich des Außendurchmessers. Die beiden unterschiedlichen Durchmesser der beiden Bohrungen können dabei so an die Außen- und Einsteckdurchmesser der Stütze angepasst sein, dass ein möglichst spielarmer Sitz des jeweiligen Trägers auf der Stütze gewährleistet ist, was die Stabilität der Geflügelhaltungsanlage positiv beeinflusst.

An derselben Stelle kann quer zu dem erwähnten U-Profil - beispielsweise einem Querträger - ein weiteres U-Profil angeordnet werden, beispielsweise ein Längsträger. Die Montage der Geflügelhaltungsanlage wird vereinfacht, wenn diese beiden Träger nicht wie weiter oben beschrieben ineinander greifend angeordnet werden, sondern übereinander, so dass jeweils nur ein einziger Träger gehandhabt zu werden braucht und unabhängig von einem anderen Träger montiert werden kann. Dieser zweite Träger wird bei der erwähnten zweiten Ausgestaltung hinsichtlich seiner beiden Außenabschnitte anders ausgerichtet als das U-Profil des zunächst montierten ersten Trägers: bei diesem zweiten, oberen Profil weist der untere Außenabschnitt die Bohrung mit dem kleineren, und der obere Außenabschnitt die Bohrung mit dem größeren Durchmesser auf.

Dieses Profil kann daher auf das Einsteckende der bereits erwähnten Stütze aufgeschoben werden und liegt schließlich dem oberen Außenabschnitt des unteren, bereits montierten U-Profils an. Eine zweite Stütze kann nun von oben auf die bereits erwähnte, untere Stütze aufgesteckt werden. Auch bei dieser oberen Stütze ist das Einsteckende nach oben ausgerichtet, so dass sie mit ihrem unteren Muffenende, wo diese Stütze ihren Außendurchmesser aufweist, durch die größere Bohrung im oberen Außenabschnitt des oberen U-Profils geführt und auf das Einsteckende der unteren Stütze aufgeschoben werden kann, bis sie auf dem unteren Außenabschnitt des oberen U-Profils aufliegt.

Wenn die Winkelprofile der Längs- und / oder der Querträger nicht als U-Profil, sondern als L-Profil ausgestaltet sind, ist eine praktisch höhengleiche Anordnung der Längs- und Querträger besonders einfach möglich. Jedoch ist wahlweise auch ein Höhenversatz der aufrechten Abschnitte im Verhältnis zu den jeweils anderen Trägern möglich, indem die als L-Profil ausgestalteten Träger so montiert werden können, dass ihre aufrechten Abschnitte entweder nach unten hängend oder nach oben stehend ausgerichtet sind.

Die Traglast einer Etage kann dadurch erhöht werden, dass die Lastabtragung der Längsträger und Querträger nicht direkt auf den Absatz der Stützen erfolgt, sondern über Zwischenscheiben. Eine solche Zwischenscheibe liegt einerseits - nämlich mit ihrer Unterseite - auf dem Absatz einer Stütze auf und bietet andererseits - nämlich mit ihrer Oberseite - dem U-Profil eine gegenüber dem Absatz vergrößerte Auflagefläche. Die Zwischenscheiben weisen also innen eine Öffnung auf, z.B. eine kreisrunde Bohrung, deren Durchmesser größer ist als der Einsteckdurchmesser der Stütze und kleiner als der Außendurchmesser der Stütze, und sie weisen außen einen Durchmesser auf, der größer ist als der Außendurchmesser der Stütze.

Mittels derartiger Zwischenscheiben kann insbesondere auch eine vorteilhaft großflächige Kraftübertragung auf den jeweiligen Längs- oder Querträger ermöglicht werden, wenn beispielsweise der Absatz an der Stütze nicht als vollständig ringsum laufender Vorsprung ausgestaltet ist. Beispielsweise kann vorgesehen sein, an einer Stütze außen durch einen Stauchvorgang einen Vorsprung anzuformen, der den Absatz bildet. Insbesondere können vorteilhaft zwei oder mehrere derartige Vorsprünge gleichmäßig am äußeren Umfang der Stütze verteilt vorgesehen sein. Durch den verwendeten Werkstoff bzw. die Materialstärke der Zwischenscheibe ist einerseits sichergestellt, dass die Zwischenscheibe sicher auf dem Absatz gehalten ist und sich unter der Last des jeweiligen Trägers nicht verformt, während sie andererseits aufgrund ihrer vergleichsweise größeren Auflagefläche für den Träger ihrerseits einen Absatz an der Stütze darstellt, dem der Träger großflächig aufliegt.

Als Stützen können vorteilhaft handelsübliche Rohre verwendet werden, beispielsweise insbesondere sogenannte "zöllige Rohre", die einen runden Querschnitt mit einem Außendurchmesser von etwa 33 mm aufweisen und eine ausreichende Stabilität für die Geflügelhaltungsanlage sicherstellen. Teilweise sind derartige Rohre als Halbzeug bereits mit einem angeformten Einsteckende handelsüblich und dementsprechend wirtschaftlich erhältlich. Derartig ausgestaltete Stützen verwirklichen in einem einzigen Bauteil den unteren Abschnitt, in dem sie ihren Außendurchmesser aufweisen und der sich über den größten Teil der Höhe dieser Stütze erstreckt, sowie den oberen, als Einsteckende ausgestalteten Abschnitt, der eine werkzeuglose Verbindung mehrerer Stützen miteinander ermöglicht, und sie verwirklichen zwischen diesen beiden Abschnitten den Absatz, in welchem sich der Durchmesser vom Außendurchmesser zum Einsteckdurchmesser verringert und der das Auflager bildet, auf welchem die an der Stütze zu haltenden Längs- und Querträger aufliegen. Abweichend von derartigen handelsüblichen Rundrohren können die Stützen jedoch auch einen mehreckigen Querschnitt aufweisen.

Durch das Stecksystem können problemlos und insbesondere werkzeuglos beliebig viele Stützen übereinander montiert werden. Eine vergleichsweise niedrige Höhe der Stützen ermöglicht es, unterschiedlich hohe Etagen zu schaffen, in dem eine entsprechend gewünschte Anzahl von Stützen übereinander angeordnet wird, bevor die Längs- und Querträger montiert werden. Hinsichtlich der Stabilität der Rahmenkonstruktion der Geflügelhaltungsanlage kann jedoch vorteilhaft vorgesehen sein, dass die Höhe einer Stütze im Wesentlichen der Höhe einer Etage entspricht - nämlich die Höhe der Stütze abzüglich ihres Einsteckendes. Auf diese Weise wird die Anzahl von Verbindungsstellen minimiert, wo ein gewisses Spiel zwischen den einzelnen Elementen der Rahmenkonstruktion auftreten kann.

Die Geflügelhaltungsanlage weist eine bestimmte Breite, eine bestimmte Länge sowie eine bestimmte Höhe auf. Während die Höhe durch die Anzahl der Etagen bestimmt wird und die Länge durch die Anzahl der aneinander gereihten Längsträger, ist die Breite der Geflügelhaltungsanlage vorzugsweise begrenzt, um einen optimalen Zugang zu der gesamten Fläche innerhalb einer Etage zu gewährleisten. Dabei kann vorteilhaft vorgesehen sein, die Querträger, die sich über die Breite der Geflügelhaltungsanlage erstrecken, so lang zu bemessen, dass ein einziger Querträger die Breite der Geflügelhaltungsanlage bestimmt. Hinsichtlich des Material- und Montageaufwandes kann vorteilhaft vorgesehen sein, dass lediglich an den beiden Enden der Querträger Stützen verlaufen. Der Abstand dieser Stützen kann vorteilhaft größer bemessen sein als der Abstand von zwei Stützen, die in Längsrichtung der Geflügelhaltungsanlage benachbart zueinander angeordnet sind. Dementsprechend überbrücken die Längsträger zwischen benachbarten Stützen einen geringeren Abstand als die Querträger. Im Interesse einer wirtschaftlichen Optimierung hinsichtlich des erforderlichen Materialbedarfs, und um das Transportgewicht beim Versand einer zerlegten Geflügelhaltungsanlage möglichst gering zu halten, können die Längsträger daher vorteilhaft eine geringere Materialstärke aufweisen als die Querträger. Beispielsweise kann ein Querträger eine Materialstärke von 2 mm aufweisen, und ein Längsträger von 1,5 mm, wobei die Stützen in Längsrichtung in einem Abstand von etwa 1 bis 1,5 m stehen können, z.B. 1,2 m Abstand zueinander aufweisen können, während die Stützen in Querrichtung einen Abstand von beispielsweise 2 bis 3 m aufweisen können.

Vorteilhaft kann auch die Montage von Zubehör an der Rahmenkonstruktion der Geflügelhaltungsanlage werkzeuglos erfolgen. Hierzu können die Längsträger bzw. die Querträger in ihrem Mittelabschnitt jeweils ausgestanzte Einhängebereiche aufweisen. Diese Einhängebereiche dienen dazu, nach unten hängende Abhängestreifen zu halten, die beispielsweise zur Befestigung von Sitzstangen oder Wassertrögen dienen.

In einer ersten Ausgestaltung können die Einhängebereiche als Fenster ausgestaltet sein welche in den Mittelabschnitt eines Längsträgers oder Querträgers gestanzt sind. Dementsprechend können die Abhängestreifen hakenähnliche Vorsprünge aufweisen, mit denen sie in ein solches Fenster eines Längsträgers oder Querträgers eingehängt werden können.

In einer zweiten Ausgestaltung kann das Wirkprinzip zur Befestigung der Abhängestreifen umgekehrt sein: in diesem Fall weist der Einhängebereich eines Längsträgers oder Querträgers eine Stanzlinie auf, die als nach unten offenes U verläuft, so dass eine nach oben ragende Lasche geschaffen ist. Wird diese Lasche gegenüber dem übrigen Längsträger oder Querträger nach außen gebogen, so wird eine Einhängelasche geschaffen, in die der Abhängestreifen von oben eingehängt werden kann, beispielsweise mittels eines Hakens, einer Schlaufe oder dergleichen.

Im Rahmen des vorliegenden Vorschlags umfasst der Hinweis auf gestanzte Ausnehmungen eines Blechs auch andere Techniken mit denen eine Ausnehmung erzeugt werden kann. Beispielsweise kann vorgesehen sein, die Bleche auf einer Laserschneidanlage zu zuschneiden und dabei auch die so genannten Ausstanzungen mittels Laser zu schneiden.

Ausführungsbeispiele von Rahmenkonstruktionen einer Geflügelhaltungsanlage werden nachfolgend anhand der rein schematischen Darstellungen näher erläutert. Dabei zeigt
- Fig. 1: eine perspektivische Ansicht auf die Rahmenkonstruktion einer Geflügelhaltungsanlage,
- Fig. 2: eine Ansicht auf den Ausschnitt einer Ecke der Rahmenkonstruktion von Fig. 1 im Übergangsbereich von zwei Etagen, in einer auseinandergezogenen, nicht vollständig montierten Darstellung,
- Fig. 3: einen Ausschnitt von zwei übereinander angeordneten Stützen dort, wo sie miteinander verbunden sind, und die
- Fig. 4 u. 5: zwei unterschiedliche Varianten, wie Längs- und Querträger an eine Stütze anschließen.

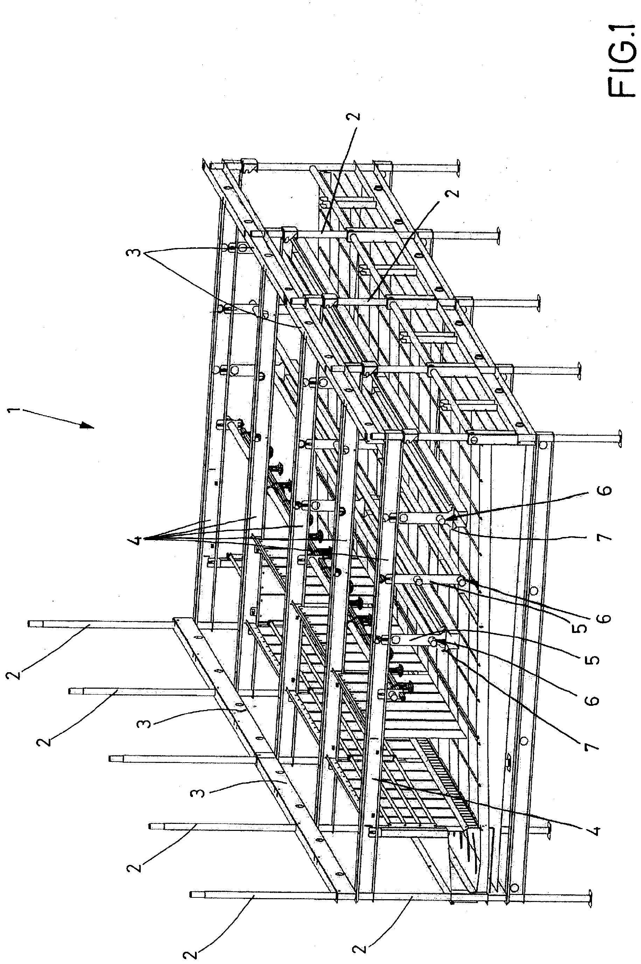

In der Fig. 1 ist mit 1 insgesamt eine Geflügelhaltungsanlage bezeichnet, von der die im Aufbau befindliche Rahmenkonstruktion dargestellt ist. Diese weist eine Vielzahl von Stützen 2 Längsträgern 3 und Querträgern 4 auf. An dem vorderen dargestellten Querträger 4 sind Abhängestreifen 5 angehängt, die jeweils mit einer Aufnahmebohrung 6 zur Halterung von Sitzstangen ausgestattet sind. Jeder zweite Abhängestreifen 5 verfügt unterhalb der Aufnahmebohrung 6 zudem über zwei Haken 7, in welche Zubehör wie z.B. Wassertröge eingehängt werden können.

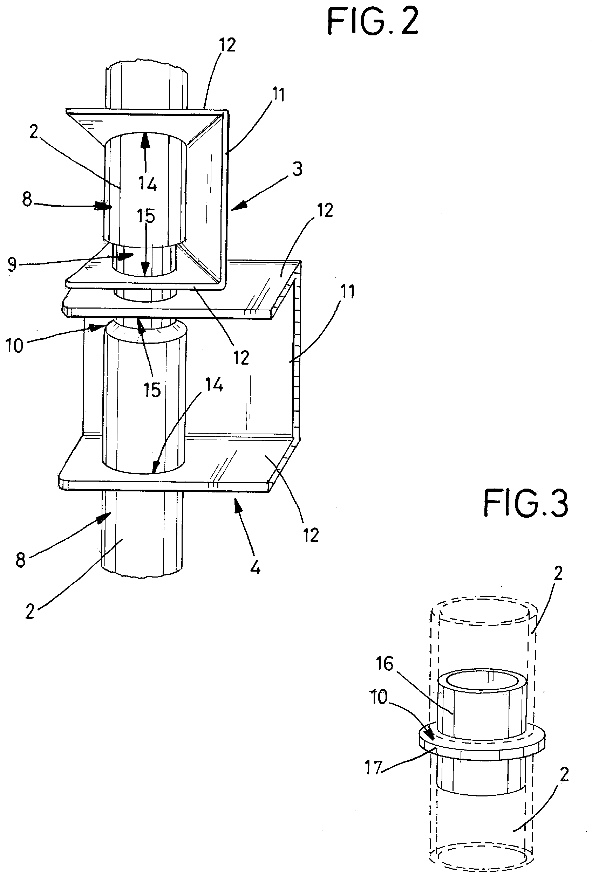

In Fig. 2 sind zwei Stützen 2 dargestellt, die jeweils als Rohr mit kreisrunden Querschnitt ausgestaltet sind. In Fig. 2 sind zur Veranschaulichung des Montageprinzips diese beiden Stützen 2 lediglich teilweise und nicht etwa vollständig ineinander gesteckt dargestellt. Beide Stützen 2 weisen einen ersten, zylindrischen Abschnitt 8 auf, der am unteren Ende einer Stütze 2 deren sogenanntes Muffenende bildet. Gegenüberliegend, am oberen Ende, weisen die Stützen 2 jeweils ein Einsteckende 9 auf, welches an den zylindrischen Abschnitt 8 der Stütze 2 angeformt ist. Im Übergangsbereich zwischen dem zylindrischen Abschnitt und dem Einsteckende 9 weist jede Stütze 2 einen Absatz 10 auf, an welchem sich der Durchmesser der Stütze 2 vom Außendurchmesser des zylindrischen Abschnitts 8 auf den Einsteckdurchmesser des Einsteckendes 9 verringert.

In Fig. 2 ist ersichtlich, dass der Querträger 4 unterhalb des Längsträgers 3 angeordnet ist. Beide Träger sind jeweils als U-Profil ausgestaltet und weisen dementsprechend einen Mittelabschnitt 11 auf sowie zwei parallel zueinander verlaufende Außenabschnitte 12. Die Materialstärke des Querträgers 4 ist größer als die des Längsträgers 3. Im unteren Außenabschnitt 12 weist der Querträger 4 eine zweite Bohrung 14 auf, deren Durchmesser so groß bemessen ist, dass sie über den zylindrischen Abschnitt 8 der unteren Stütze 2 geführt werden kann. Im oberen Außenabschnitt 12 des Querträgers 4 ist eine erste Bohrung 15 vorgesehen, die einen geringeren Durchmesser als die zweite Bohrung 14 aufweist, so dass der Querträger 4 mit seiner oberen, ersten Bohrung 15 über das Einsteckende 9 der unteren Stütze 2 geführt werden kann, bis der obere Außenabschnitt 12 auf dem Absatz 10 der Stütze 2 aufliegt. In Fig. 2 ist der Querträger 4 vor Erreichen seiner endgültigen Stellung dargestellt, so dass sich der obere Außenabschnitt 12 des Querträgers 4 noch oberhalb des Absatzes 10 befindet.

Der Längsträger 3 in Fig. 2 weist in seinem unteren Außenabschnitt 12 eine erste Bohrung 15 mit dem erwähnten, geringeren Durchmesser auf, und in seinem oberen Außenabschnitt 12 eine zweite Bohrung 14 mit dem größeren Durchmesser. Auch der Längsträger 3 ist nicht vollständig montiert dargestellt, sondern vor Erreichen seiner endgültigen Position, in welcher nämlich sein unterer Außenabschnitt 12 auf dem oberen Außenabschnitt 12 des unten befindlichen Querträgers 4 aufliegt.

Die in Fig. 2 oben dargestellte Stütze 2 kann mit ihrem unteren zylindrischen Abschnitt 8, der den größeren Außendurchmesser der Stütze 2 aufweist, durch die obere, größere, erste Bohrung 14 des Längsträgers geführt werden und dabei auf das Einsteckende 9 der unteren Stütze 2 aufgeschoben werden, so dass dieses untere Ende der Stütze 2 als Muffenende bezeichnet wird, welches mit dem Einsteckende 9 einer benachbarten Stütze 2 zusammenwirkt. Diese Absenkbewegung der oberen Stütze 2 erfolgt, bis die obere Stütze 2 mit ihrem unteren Ende auf dem unteren Außenabschnitt 12 des Längsträgers 3 aufsteht.

In Fig. 3 ist ein Einsteckelement 16 dargestellt, welches etwa auf seiner mittleren Höhe einen umlaufenden Bund 17 aufweist. Gestrichelt sind zwei Stützen 2 angedeutet, die jeweils als zylindrisches Rohr ausgestaltet sind und mittels des Einsteckelements 16 miteinander verbunden sind. Hierzu erstrecken sich die beiden oberhalb und unterhalb des Bundes 17 befindlichen Abschnitte des Einsteckelements 16 jeweils in die obere bzw. untere Stütze 2. Der Bund 17 bildet einerseits einen Anschlag, der verhindert, dass das Einsteckelement 16 vollständig in die untere Stütze 2 hineinrutscht. Zudem weist bei diesem Ausführungsbeispiel der Bund 17 einen so großen Außendurchmesser auf, dass er über den äußeren Umfang der Stützen 2 hinausragt und so einen umlaufenden Absatz 10 bildet, der zur Montage von Längsträgern 3 und Querträgern 4 genutzt werden kann.

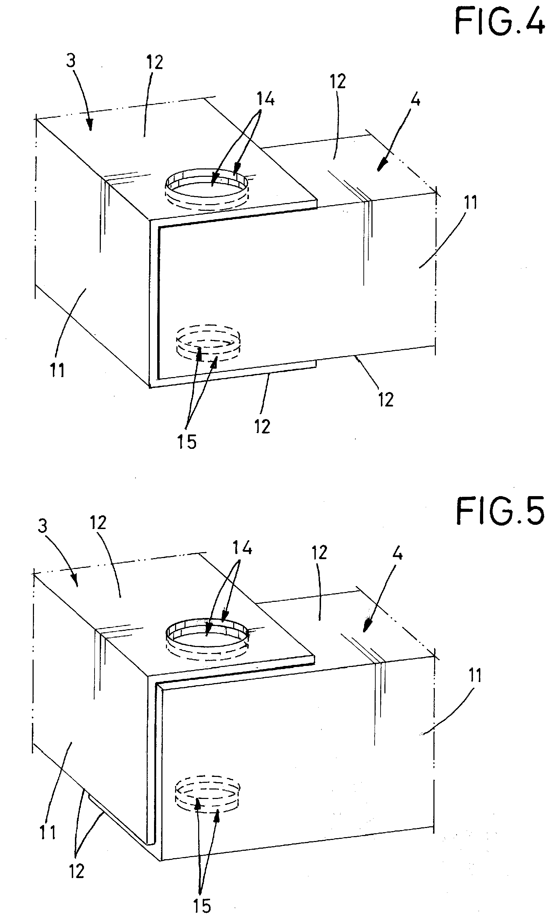

Die Fig. 4 und 5 zeigen im Unterschied zu dem Ausführungsbeispiel der Fig. 1 und 2 Varianten, wie ein Längsträger 3 und ein Querträger 4 annähernd höhengleich an Stützen anschließen können. Die beiden Bohrungen in den oberen Außenabschnitten 12 sind jeweils als zweite Bohrung 14 bezeichnet, wie bei dem Längsträger 3 in Fig. 2, und die beiden Bohrungen in den unteren Außenabschnitten 12 der beiden Längs- und Querträger 3 und 4 sind dement sprechen jeweils als erste Bohrung 15 bezeichnet. Die vier in einem Ausführungsbeispiel dargestellten Bohrungen 14 und 15 fluchten jeweils miteinander, wobei jedoch aus Übersichtlichkeitsgründen Stützen 2, die sich durch diese Bohrungen 14 und 15 erstrecken, in den Fig. 4 und 5 nicht dargestellt sind.

Beim Ausführungsbeispiel der Fig. 4 weist der Längsträger 3 ein U-Profil mit einem größeren Profilquerschnitt auf als der Querträger 4. Der Querträger 4 taucht daher in den Profilquerschnitt des Längsträgers 3 ein. Die Mittelabschnitte 11 der beiden Längs- und Querträger 3 und 4 sind jeweils nach außen, also zum Betrachter hin, ausgerichtet. Der Querträger 4 kann abweichend von dem dargestellten Ausführungsbeispiel jedoch auch um 180° gedreht angeordnet werden, mit nach innen gerichtetem Mittelabschnitt 11.

Beim Ausführungsbeispiel der Fig. 5 weisen die beiden Längs- und Querträger 3 und 4 jeweils U-Profile mit gleich großen Profilquerschnitten auf. Im Unterschied zu dem Ausführungsbeispiel der Fig. 1 und 2 sind sie jedoch nicht vollständig höhenversetzt montiert, sondern praktisch höhengleich und nur in der Weise höhenversetzt, dass sie ineinander verzahnt angeordnet sind. Diese Montage ist dadurch möglich, dass die Mittelabschnitte 11 der beiden Längs- und Querträger 3 und 4 jeweils nach außen, also zum Betrachter hin, ausgerichtet sind.

### Bezugszeichen:

- 1: Geflügelhaltungsanlage
- 2: Stütze
- 3: Längsträger
- 4: Querträger
- 5: Abhängestreifen
- 6: Aufnahmebohrung - für Sitzstange
- 7: Haken -für Wassertrog
- 8: Zylindrischer Abschnitt
- 9: Einsteckende
- 10: Absatz
- 11: aufrechter Abschnitt
- 12: Außenabschnitt
- 14: Zweite Bohrung
- 15: Erste Bohrung
- 16: Einsteckelement
- 17: Bund

## Patentansprüche

1. Geflügelhaltungsanlage (1),
mit mehreren, in einem regelmäßigen Raster und im Abstand voneinander aufgestellten aufrechten Stützen (2),
die jeweils ein Einsteckende (9) und ein Muffenende aufweisen,
und die einen ersten Abschnitt (8) mit einem ersten, als Außendurchmesser bezeichneten äußeren Durchmesser aufweisen
sowie im Bereich ihres Einsteckendes (9) einen zweiten, als Einsteckdurchmesser bezeichneten äußeren Durchmesser, der geringer ist als der Außendurchmesser, derart, dass im Übergangsbereich vom Außendurchmesser zum Einsteckdurchmesser ringförmig um das Einsteckende (9) ein Absatz (10) verläuft wobei eine Stütze (2) als Rohr ausgestaltet ist, und als einstückiges Bauteil den ersten Abschnitt und an den Absatz (10) nach oben anschließend den Bereich des Einsteckendes (9) aufweist,
wobei jeweils wenigstens zwei Stützen (2) übereinander angeordnet sind und die Stützen (2) Absätze (10) aufweisen, die jeweils in radialer Richtung verlaufen,
und mit mehreren an den Stützen (2) gehaltenen Längsträgern (3) und Querträgern (4),
wobei mehrere Längsträger (3) und Querträger (4) jeweils in einer Etage der Geflügelhaltungsanlage (1) angeordnet sind
und die Geflügelhaltungsanlage (1) wenigstens zwei Etagen übereinander aufweist, und die Längsträger (3) und Querträger (4) jeweils als Winkelprofilschienen ausgestaltet sind,
deren Profilquerschnitt jeweils einen aufrechten Abschnitt (11) und einen liegenden Außenabschnitt (12) aufweist, und in dem liegenden Außenabschnitt (12) eine als Bohrung (14, 15) bezeichnete Ausnehmung angeordnet ist, die einen Durchmesser aufweist, der kleiner ist als der Durchmesser des Absatzes (10),
**dadurch gekennzeichnet,**
**dass** ein Längsträger (3) und / oder ein Querträger (4) als aus Blech gekantetes U-Profil ausgestaltet ist,
dessen Profilquerschnitt einen aufrechten Abschnitt (11) als Mittelabschnitt und zwei liegende, im Abstand übereinander verlaufende Außenabschnitte (12) aufweist,
wobei in den beiden gegenüberliegenden Außenabschnitten (12) zwei miteinander fluchtende, als Bohrungen (14, 15) bezeichnete Ausnehmungen angeordnet sind,
von denen wenigstens eine Bohrung (15) einen Durchmesser aufweist, der kleiner ist als der Durchmesser des Absatzes (10),
und von den beiden Bohrungen (14, 15) eines Längsträgers (3) oder Querträgers (4) eine erste Bohrung (15) einen ersten Durchmesser aufweist, der größer ist als der Einsteckdurchmesser und kleiner als der Außendurchmesser einer Stütze (2),
und die zweite Bohrung (14) einen zweiten Durchmesser aufweist, der größer ist als der Außendurchmesser einer Stütze (2).

2. Geflügelhaltungsanlage nach Anspruch 1,
**dadurch gekennzeichnet,**
**dass** die Höhe einer Stütze (2) im Wesentlichen der Höhe einer Etage entspricht.

3. Geflügelhaltungsanlage nach Anspruch 1 oder 2,
**dadurch gekennzeichnet,**
**dass** die Materialstärke der Querträger (4) größer ist als die Materialstärke der Längsträger (3)
und die Länge der Querträger (4) im Wesentlichen der Breite der Geflügelhaltungsanlage (1) entspricht,
während wenigstens zwei Längsträger (3) aneinandergereiht sind und die Länge der Geflügelhaltungsanlage (1) bestimmen.

4. Geflügelhaltungsanlage nach einem der vorhergehenden Ansprüche,
**dadurch gekennzeichnet,**
**dass** die Längsträger (3) und / oder die Querträger (4) in ihrem aufrechten Abschnitt (11) ausgestanzte Einhängebereiche aufweisen, in welche nach unten hängende Abhängestreifen (5) eingehängt sind.

5. Geflügelhaltungsanlage nach Anspruch 4,
**dadurch gekennzeichnet,**
**dass** ein Einhängebereich als ein in den aufrechten Abschnitt (11) gestanztes Fenster ausgestaltet ist.

6. Geflügelhaltungsanlage nach Anspruch 4,
**dadurch gekennzeichnet,**
**dass** ein Einhängebereich eine Stanzlinie in Form eines umgedrehten, nach unten offenen U aufweist sowie eine von der Stanzlinie umgebene, nach außen gebogene Einhängelasche.

7. Geflügelhaltungsanlage nach einem der vorhergehenden Ansprüche,
**dadurch gekennzeichnet,**
**dass** ein Längsträger (3) oder ein Querträger (4) auf einer Zwischenscheibe aufliegt,
welche ihrerseits auf dem Absatz (10) der Stütze (2) aufliegt,
und einen äußeren Durchmesser aufweist, der größer ist als der Außendurchmesser der Stütze (2).

8. Geflügelhaltungsanlage nach einem der vorhergehenden Ansprüche,
**dadurch gekennzeichnet,**
**dass** ein Längsträger (3) und / oder ein Querträger (4) als aus Blech gekantetes Winkelprofil ausgestaltet ist.

## Claims

1. Poultry-rearing system (1),
having a plurality of upright supports (2) that are arranged in a regular grid and set at a distance from one another
and each of which incorporates an inserted end (9) and a socket end
and incorporates a first section (8) having a first outer diameter referred to as outside diameter
and in the area of its inserted end (9) a second outer diameter that is smaller than the outside diameter and is referred to as inserted diameter,
such that in the area of transition from the outside diameter to the inserted diameter (9) a shoulder (10) extends all the way round,
where a support (2) is constructed in the form of a tube and incorporates as a single-piece component part the first section and the area of the inserted end (9) connected above to the shoulder (10),
where at each support point at least two supports (2) are arranged one above the other and the supports (2) incorporate shoulders (10) each of which extends in a radial direction,
and having a plurality of longitudinal members (3) and cross-members (4) attached to the supports (2),
where a number of longitudinal members (3) and cross-members (4) are each arranged on one level of the poultry-rearing system (1) and the poultry-rearing system (1) incorporates at least two levels arranged one above the other and the longitudinal members (3) and cross-members (4) are each constructed in the form of angled profile bars,
the cross-section of each of which incorporates an upright section (11) and a horizontal outer section (12) and in the horizontal outer section (12) a recess referred to as a drilled hole (14, 15) is arranged that incorporates a diameter that is smaller than the diameter of the shoulder (10),
**characterised in**
**that** a longitudinal member (3) and/or a cross-member (4) is constructed in the form of a U-profile formed from metal sheet
the cross-section of which incorporates an upright section (11) forming a middle section and two horizontal outside sections (12) extending one above the other a distance apart,
where in the two opposing outside sections (12) two recesses referred to as drilled holes (14, 15) are arranged one in line with the other,
of which at least one drilled hole (15) incorporates a diameter that is smaller than the diameter of the shoulder (10),
and of the two drilled holes (14, 15) in a longitudinal member (3) or a cross-member (4) a first drilled hole (15) incorporates a first diameter that is larger than the inserted diameter and smaller than the outside diameter of a support (2)
and the second drilled hole (14) incorporates a second diameter that is larger than the outside diameter of a support (2).

2. Poultry-rearing system in accordance with claim 1, **characterised in that** the height of a support (2) is essentially equal to the height of a level.

3. Poultry-rearing system in accordance with claim 1 or 2, **characterised in**
**that** the material from which the cross-members (4) are made is thicker than the material from which the longitudinal members (3) are made and the length of the cross-members (4) is essentially equal to the width of the poultry-rearing system (1),
while at least two longitudinal members (3) are placed end to end and determine the length of the poultry-rearing system (1).

4. Poultry-rearing system in accordance with any one of the foregoing claims,
**characterised in**
**that** the longitudinal members (3) and/or the cross-members (4) incorporate suspension points that are punched into their upright section (11) and into which suspension strips (5) are suspended.

5. Poultry-rearing system in accordance with claim 4, **characterised in that** a suspension point is constructed in the form of a window punched into the upright section (11).

6. Poultry-rearing system in accordance with claim 4, **characterised in that** a suspension point incorporates a punching line in the form of an inverted U that is open at the bottom and a suspension plate that is bent outwards and is enclosed by the punching line.

7. Poultry-rearing system in accordance with any one of the foregoing claims, **characterised in**
**that** a longitudinal member (3) or a cross-member (4) rests on an intermediate plate
**that** in turn rests on the shoulder (10) of the support (2)
and incorporates an outer diameter that is larger than the outside diameter of the support (2).

8. Poultry-rearing system in accordance with any one of the foregoing claims, **characterised in that** a longitudinal member (3) and/or a cross-member (4) is constructed in the form of an angled profile formed from metal sheet.

## Revendications

1. Installation d'élevage avicole (1)
comprenant plusieurs montants (2) verticaux disposés à distance les uns des autres selon une trame régulière,
montants qui présentent une extrémité d'emboîtement (9) et une extrémité manchon,
et qui présentent un premier segment (8) dont le premier diamètre externe est appelé diamètre extérieur
et qui présentent dans la zone de leur extrémité d'emboîtement (9) un deuxième diamètre externe appelé diamètre d'emboîtement inférieur au diamètre extérieur,
de sorte que dans la zone de transition entre le diamètre extérieur et le diamètre d'emboîtement se trouve un épaulement (10) s'étendant de façon annulaire autour de l'extrémité d'emboîtement (9),
sachant qu'un montant (2) est configuré en tube et présente le premier segment sous forme de composant monobloc et, se raccordant à l'épaulement (10) en direction du haut, la zone de l'extrémité d'emboîtement (9),
sachant qu'au moins deux montants (2) sont superposés et que les montants (2) présentent des épaulements (10) aux tracés respectivement radiaux,
et avec plusieurs poutrelles longitudinales (3) et poutrelles transversales (4) maintenues contre les montants (2),
sachant que plusieurs poutrelles longitudinales (3) et poutrelles transversales (4) sont disposées respectivement en un étage de l'installation d'élevage avicole (1)
et que l'installation d'élevage avicole (1) présente au moins deux étages superposés et que les poutrelles longitudinales (3) et poutrelles transversales (4) sont respectivement configurées en rails profilés coudés, dont la section transversale du profilé présente respectivement un segment vertical (11) et un segment extérieur horizontal (12) et que dans le segment extérieur horizontal (12) est disposé un évidemment désigné comme alésage (14, 15) et présentant un diamètre inférieur au diamètre de l'épaulement (10), **caractérisée en ce**
**qu'**une poutrelle longitudinale (3) et/ou une poutrelle transversale (4) est configurée sous forme de profilé en U en tôle à bords relevés,
dont la section transversale du profilé présente un segment vertical (11) officiant de segment médian et deux segments extérieurs (12) horizontaux s'étendant en superposition à distance l'un de l'autre,
sachant que dans les deux segments extérieurs (12) se faisant face sont disposés deux évidements en alignement réciproque appelés alésages (14, 15),
dont au moins un alésage (15) présente un diamètre inférieur au diamètre de l'épaulement (10),
et **que** sur les deux alésages (14, 15) d'une poutrelle longitudinale (3) ou poutrelle transversale (4), un premier alésage (15) présente un premier diamètre supérieur au diamètre d'emboîtement et inférieur au diamètre extérieur d'un montant (2),
et dont le deuxième alésage (14) présente un deuxième diamètre supérieur au diamètre extérieur d'un montant (2),

2. Installation d'élevage avicole selon la revendication 1, **caractérisée en ce que** la hauteur d'un montant (2) correspond pour l'essentiel à la hauteur d'un étage.

3. Installation d'élevage avicole selon la revendication 1 ou 2, **caractérisée en ce**
**que** l'épaisseur du matériau des poutrelles transversales (4) est supérieure à l'épaisseur du matériau des poutrelles longitudinales (3) et en ce que la longueur des poutrelles transversales (4) correspond essentiellement à la largeur de l'installation d'élevage avicole (1),
tandis qu'au moins deux poutrelles longitudinales (3) sont juxtaposées dans le sens de la longueur et définissent la longueur de l'installation d'élevage avicole (1).

4. Installation d'élevage avicole selon l'une des revendications précédentes,
**caractérisée en ce**
**que** les poutrelles longitudinales (3) et/ou les poutrelles transversales (4) présentent sur leur segment vertical (11) des zones d'accrochage découpées à l'emporte-pièce, dans lesquelles sont accrochés des rubans de suspension (5) pendant vers le bas.

5. Installation d'élevage avicole selon la revendication 4, **caractérisée en ce qu'**une zone d'accrochage est configurée sous forme de fenêtre découpée à l'emporte-pièce dans le segment vertical (11).

6. Installation d'élevage avicole selon la revendication 4, **caractérisée en ce qu'**une zone d'accrochage présente une ligne découpée à l'emporte-pièce en forme de U retourné ouvert vers le bas, ainsi qu'une patte d'accrochage entourée par la ligne découpée à l'emporte-pièce et incurvée vers l'extérieur.

7. Installation d'élevage avicole selon l'une des revendications précédentes,
**caractérisée en ce**
**qu'**une poutrelle longitudinale (3) ou une poutrelle transversale (4) s'appuie sur une rondelle intercalaire,
laquelle rondelle s'appuie à son tour sur l'épaulement (10) du montant (2), et présente un diamètre extérieur supérieur au diamètre extérieur du montant (2).

8. Installation d'élevage avicole selon l'une des revendications précédentes, **caractérisée en ce qu'**une poutrelle longitudinale (3) et/ou une poutrelle transversale (4) est configurée sous forme de profilé coudé en tôle à bords relevés.
